Europäisches Patentamt

European Patent Office

Office européen des brevets

(19)

(11) Publication number: **0 306 577 B1**

# EUROPEAN PATENT SPECIFICATION

(12)

(45) Date of publication of patent specification: **14.07.93**  (51) Int. Cl.⁵: **G01S 5/04**, G01S 1/68

(21) Application number: **87310154.7**

(22) Date of filing: **18.11.87**

Divisional application 90202267.2 filed on 18/11/87.

(54) **System and method for determining the position of a person or other body.**

(30) Priority: **08.09.87 JP 224708/87**
**27.10.87 JP 270557/87**

(43) Date of publication of application:
**15.03.89 Bulletin 89/11**

(45) Publication of the grant of the patent:
**14.07.93 Bulletin 93/28**

(84) Designated Contracting States:
**AT BE CH DE ES FR GB GR IT LI LU NL SE**

(56) References cited:
**EP-A- 0 017 448**     **EP-A- 0 133 378**
**EP-A- 0 404 280**     **FR-A- 2 578 059**
**GB-A- 2 045 988**     **US-A- 4 596 988**

(73) Proprietor: **Sakuma, Susumu**
**16-7 Uetomino 3-chome Kokurakita-ku**
**Kitakyushu-shi Fukuoka-ken(JP)**

(72) Inventor: **Sakuma, Susumu**
**16-7 Uetomino 3-chome Kokurakita-ku**
**Kitakyushu-shi Fukuoka-ken(JP)**

(74) Representative: **Coxon, Philip et al**
**Eric Potter & Clarkson St. Mary's Court St.**
**Mary's Gate**
**Nottingham NG1 1LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 306 577 B1

## Description

This invention relates to a system and method for determining the position of a person or other body according to the preamble of claims 1 and 5 resp. The invention also relates to a portable radio signal transmitter.

Among conventionally used instruments or devices to provide against emergencies or threats include a portable alarm or a crime prevention buzzer which are carried at all times and operated to sound a warning by a buzzer should emergency arise. The warning buzzer sound is audible by the neighbourhood who should then immediately inform the police or other suitable authorities for prompt investigation and rescue. However, it is unlikely that anyone would hear the buzzer in a thinly built-up area or at midnight. Moreover, an assailant who hears the buzzer sound might panic and counterattack the user of the alarm.

Abduction or kidnapping are on the increase almost over the world. Usually, the abduction is first discovered when a hostage's family, for example, receives a ransom call from the abductor. The hostage's family then informs the police or the investigating authorities to ask for a search. The police may trace the telephone call from the abductor to follow a lead on the case. The hostage's family, however, often tends to keep the case a secret to get the hostage back safe, in which case the police is kept out of the case and cannot institute the search. No prompt investigation and rescue is established.

GB 2 045 988 discloses an emergency system for vehicles which comprises a signal transmitter in the vehicle which is activated automatically by a sensor in the vehicle which detects when the vehicle is involved in an accident. The signal transmitted by the transmitter is received by a detector on one or more receiving stations.

It is therefore an object of the invention to provide a system for searching a source of a radio signal transmitted by a person to be protected in an emergency for prompt investigation and rescue.

Another object of the invention is to apply the system in general to determining the location of moving bodies, which can be utilised for labour control.

According to the invention there is provided a system for determining the position of a person or other body having the features of claim 1.

According to the invention there is also provided a method of determining the position of a person or other body having the features of claim 5.

Further features of the invention are defined in Claims 2, 3 and 4.

The system and method is particularly useful in cases of emergency, for example when the person carrying the detector is attacked.

The system and method can also be used to follow moving bodies.

Reference is now made to the accompanying drawings in which:-

Figures 1, 1A, 1B and 1C illustrate the principles involved in triangular surveying, which is used for determining the position of a radio signal source according to the invention; and

Figure 2 is a map showing a trace of a signal source and a position of a directional antenna, during test sample.

Personal protection against emergencies according to one aspect of the present invention utilises a transmitter adapted to generate a wireless signal. Each person to be protected by the present system must always carry the transmitter and manually switches the transmitter on should emergency arise, thereby generating an emergency signal of a predetermined frequency. Before making the system operatable, the frequency of the emergency signal should preferably be assigned and predetermined by the Radio Regulatory Commission or other authorities concerned, to prevent jamming or interference. The emergency signal must have an output large enough to be received by antennas described later.

This system further comprises, on the ground, a watching sub-system, a chasing sub-system and a computer sub-system.

The watching sub-system includes a plurality of non-directional antennas mounted substantially evenly over a protectable area which operates at all hours to watch out for an emergency signal transmitted. The emergency signal generated by the operator in an emergency will be detected by at least one of the non-directional antennas located relatively near the signal source. The watching sub-system may preferably utilise a network of a security system already in operation.

The chasing sub-system includes several directional scanners or antennas mounted dispersively in the protectable area. This sub-system is operated in response to detection of the emergency signal by the antenna or antennas of the watching sub-system to rotate two or more of the directional antennas and to detect two directions in which field strength meters attached to the respective antennas show the maximum field strength values. With the data concerning the locations of the respective antennas and the two directions showing the maximum field strength, the signal source, indicating where the operator is imprisoned by the abductor, for example, will be determined by utilizing triangular surveying.

The computer sub-system functions to integrate the information of the watching and chasing sub-systems and to support operation thereof. Preferably, a computer display illustrates a map in the protectable area on a scale which is magnified by degree as the chase progresses in the watching and chasing sub-systems. Detection of the two directions showing the maximum field strength in the chasing sub-system may also be effected with the help of the computer.

The emergency signal transmitter may preferably be equipped with an additional function to generate at the same time a personal identification code by way of pulse code modulation, for example. This will make it possible to identify the person who encounters the emergency, as well as to determine the location where he or she is.

As aforementioned, according to the invention triangular surveying is utilized to determine the source of the emergency signal. This will now be explained in more detail.

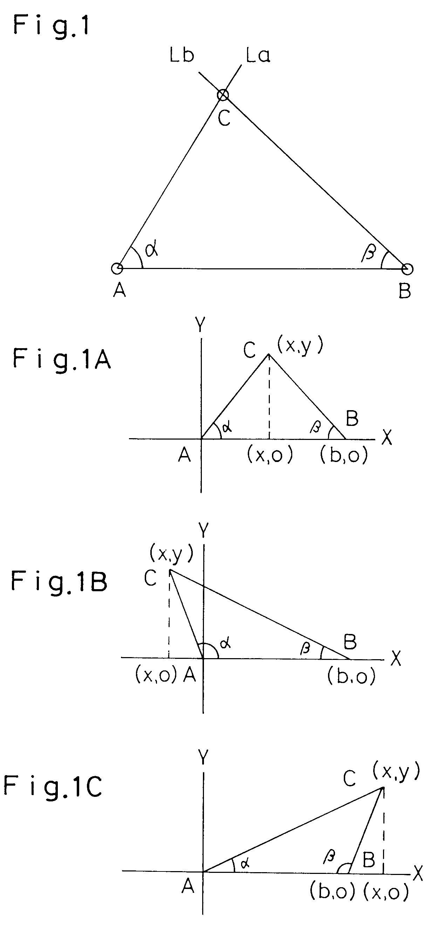

Referring to Figure 1, two half lines La and Lb extending from fixed points A and B respectively cross each other at a point C, and angles between a segment of a line AB and the lines La and Lb are defined as $\alpha$ and $\beta$, respectively. In this case only one triangle ABC will be given, thus specifically determining the location of the intersecting point C.

Suppose scanners or antennas in the chasing sub-system are mounted at points A and B respectively, which show the maximum field strength in directions La and Lb respectively, a source of the emergency signal can readily be specified as being located at a point C.

Referring now to Figures 1A, 1B and 1C, point A is an origin (0,0) and point B set on the X-axis has co-ordinates of (b,0). Provided that sides AB and AC cross each other at an angle $\alpha$ and sides BA and BC at an angle $\beta$, and that a point C is set on co-ordinates (x,y), the following two equations can be obtained:

$$y = x\tan\alpha \quad (1)$$
$$y = (b - x)\tan\beta \quad (2)$$

Equations (1) and (2) leads:

$$x\tan\alpha = (b - x)\tan\beta$$
$$\therefore x(\tan\alpha + \tan\beta) = b\tan\beta$$

$$\therefore \quad x = \frac{b\tan\beta}{\tan\alpha + \tan\beta} \quad --- (3)$$

"x" in equation (1) is substituted by equation (3) to lead:

$$y = \frac{b\tan\alpha \cdot \tan\beta}{\tan\alpha + \tan\beta} \quad --- (4)$$

Thus, co-ordinates (x,y) of point C can be specified from equations (3) and (4).

In the above calculation point C is supposed to be located as shown in Figure 1A where $0° < \alpha < 90°$ and $0° < \beta < 90°$, however, the same relations will apply to the cases of Figure 1B where $90° < \alpha < 180°$ and $0° < \beta < 90°$ and Figure 1C where $0° < \alpha < 90°$ and $90° < \beta < 180°$. The same will also apply to the case where point C is located below the X-axis.

In some special cases, co-ordinates of point C may be determined as follows:

Where $\alpha = 90°$ and $0° < \beta < 90°$,

$$x = 0, y = b\tan\beta$$

Where $0° < \alpha° < 90°$ and $\beta = 90°$,

$$x = b, y = b\tan\alpha$$

In some exceptional cases co-ordinates of point C cannot be specifically determined but its location can be followed up on the following assumptions:

Where $\alpha = 0°$ and $\beta = 0°$,
C is located on the X-axis between A and B
Where $\alpha = 0°$ and $\beta = 180°$,
C is located on the X-axis and on the right of B
Where $\alpha = 180°$ and $\beta = 0°$,
C is located on the X-axis and on the left of B

The portable transmitter used in the present system may be of any conventional type that generates a wireless signal of a predetermined frequency. However, it is desirable that inadvertent operation of the transmitter is avoided. The signal should be transmitted only in an emergency. In conventional transmitters there is no means to prevent inadvertent operation, which can result in the signal being accidentally generated, and can cause confusion. A transmitter for use with the present invention is that disclosed in the application, EP 0 404 280.

In the foregoing description the system is used in practice when a person carrying the radio signal transmitter manually operates the transmitter to generate the emergency signal when he meets any emergency or contingency, particularly when he is abducted. The non-directional antennas of the watching sub-system will continuously watch for the emergency signal without a break and the directional antennas of the chasing sub-system will stand by so as to start its operation at any time responsive to detection of the emergency signal by one or more of the non-directional antennas.

This overall system is, however, applicable more widely to the determination of the position of a moving body. For example, an insurance company employs a lot of salesmen dispersed over a specific area and spending almost their working hours outside the company.

To control effectively the labour force it is desirable to constantly watch where the employees are or how they move. This is possible by utilising the network of the system according to the invention. Every salesman carries the portable radio signal transmitter about himself whose switch is fixed to the ON position, or which is equipped with no switch operating member, to constantly generate the signal of the predetermined frequency, which is in turn received by the non-directional antenna or antennas and by the directional antennas. Identification of each salesman can be made by frequency modulation.

Test Sample

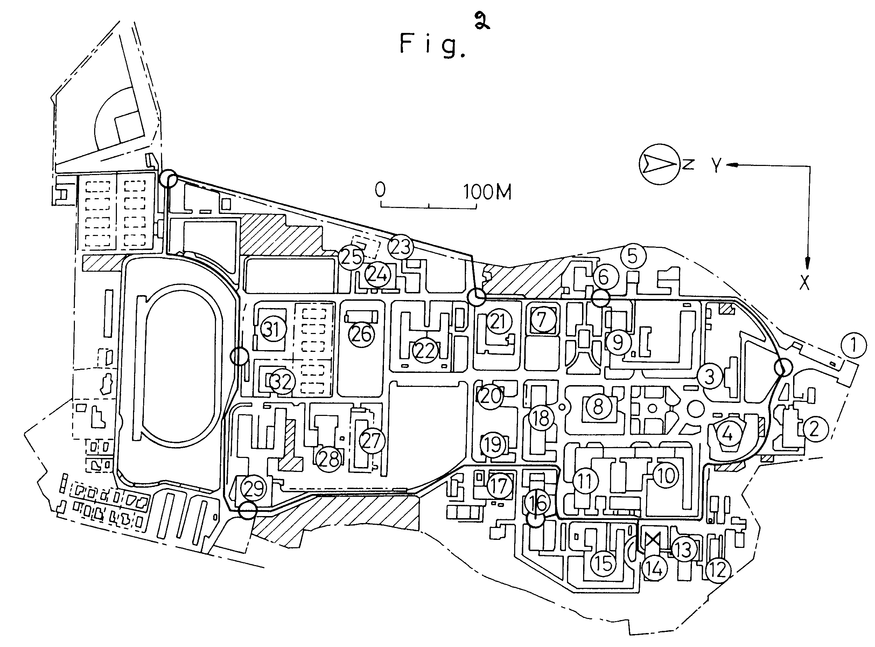

A radio control transmitter for radio-controlled model airplains (Futaba Denshi Kogyo, FP-8AP, signal frequency of 40MHz) was used as a portable radio signal transmitter. Referring to Figure 2, a person carrying the transmitter with the switch kept turned on started walking from the roof of a 4-storey building No.14. He slowly walked around the course shown by a successive bold line in the clockwise direction and then returned to the No.14 building. On the way, he stopped at positions shown by a circle for 5 to 10 minutes.

A 4-element directional Yagi antenna (Maspro Denko, 50T4, for 52MHz) was mounted on the roof of No.14 building at a height of 4m and rotated by a rotator (KENPRO, KR-5600A). A field strength meter (Leader Denshi, LFC-945) was coupled to the antenna via coaxial cable (75Ω) to measure with the eye the direction in which the meter showed a maximum field strength value.

The purpose of this test was to compare with each other the position of the transmitter and the direction showing the maximum field strength, both varying with time. As a result it was confirmed that the transmitter was positioned substantially in the direction of the antenna showing the maximum field strength. This shows that the radio signal source can be traced in accordance with triangular surveying.

It should be noted that the instruments including the transmitter and antenna used in this test are not of high-fidelity standard. The eye-measurement of the direction showing the maximum field strength would produce some degree of error. Nevertheless, substantially satisfactory results were obtained in this test. If high-fidelity transmitters and receivers is used and the maximum field strength is automatically detected with the help of a computer, more reliable results will be obtained, leading to more accurate and definite determination of the radio signal source. Thus, prompt rescue or search may be arranged.

Claims

1. A system for determining the position of a person or other body which comprises a transmitter for generating radio signal of a predetermined frequency carried by the person or other body; a plurality of directional antennas being operated and rotated and dispersed within a protectable area and provided with field strength meters, so that the direction in which said field strength meters of each of said operated directional antennas shows the maximum field strength is detected; and a control centre serving to determine exactly the position of said radio signal source according to triangular surveying based on the position of said directional antennas operated and said detected directions; characterised in that the system further comprises a plurality of non-directional antennas dispersed substantially evenly within said protectable area, such that one or more of said non-directional antennas can receive said radio signal when transmitted from anywhere in said protectable area, thereby roughly determining position of the source of said radio signal; and at least two of said directional antennas are located near said non-directional antenna(s) receiving said radio signal, and are operated in response to said non-directional antenna(s) receiving said radio signal to rotate to detect two directions in which said directional antennas detect the maximum field strength respectively; the control centre determining the exact position of the radio signal source according to triangular surveying based on the position of the two directional antennas operated and the two directions in which said two directional antennas detected the maximum field strength.

2. A system according to Claim 1, characterised in that the control centre includes a computer, and in that said directions showing the maximum field strength are detected by utilising said computer.

3. A system according to Claim 2, characterised in that said computer is adapted to receive information concerning said radio signal source from said non-directional antennas and said directional antennas, and to plot a peripheral map on a display connected thereto.

4. A system according to Claim 1, 2 or 3, characterised in that said radio signal transmitter is adapted to generate a radio signal which includes a personal identification signal.

5. A method of determining the position of a person or other body comprising transmitting a radio signal of a predetermined frequency from a transmitter carried on said person or other body; operating and rotating two or more of a plurality of directional antennas dispersed within a protectable area, said directional antennas being provided with field strength meters; detecting the direction in which said field strength meters of each of said operated directional antennas shows the maximum field strength; and exactly determining the position of said radio signal source and thus the exact position of said body, in accordance with triangular surveying based on the position of said operated directional antennas and said detected directions; characterised by receiving said radio signal when transmitted from anywhere in said protectable area by at least one of a plurality of non-directional antennas dispersed substantially evenly within said protectable area, thereby roughly determining position of the source of said radio signal; locating at least two of said directional antennas near said non-directional antenna(s) receiving said radio signal, operating said at least two directional antennas in response to said non-directional antenna(s) receiving said radio signal to rotate to detect two directions in which said directional antennas detect the maximum field strength respectively; and determining in the control centre the exact position of the radio signal source according to triangular surveying based on the position of the two directional antennas operated and the two directions in which said two directional antennas detected the maximum field strength.

**Patentansprüche**

1. System zum Bestimmen der Position einer Person oder eines anderen Körpers, mit einem durch die Person oder den anderen Körper getragenen Sender zum Erzeugen eines Funksignals mit einer vorbestimmten Frequenz; einer Vielzahl von Richtantennen, die betrieben und rotiert werden und in einem zu schützenden Flächenbereich verstreut und mit Feldstärkemeßgeräten ausgestattet sind, so daß die Richtung, in welcher die Feldstärkemeßgeräte von jeder der betriebenen Richtantennen die maximale Feldstärke zeigt, detektiert wird; und einer Steuerzentrale, welche zum exakten Bestimmen der Position der Funksignalquelle dient, entsprechend einer Triangularvermessung, die auf der Position der betriebenen Richtantennen und den detektierten Richtungen basiert; dadurch gekennzeichnet, daß

das System ferner eine Vielzahl von Nicht-Richtantennen umfaßt, die im wesentlichen in gleicher Weise innerhalb des zu schützenden Flächenbereichs verstreut sind, so daß eine oder mehrere der Nicht-Richtantennen das Funksignal empfangen kann, wenn es von irgendwo in dem zu schützenden Flächenbereich ausgesendet wird, wodurch die Position der Quelle des Funksignals grob bestimmt wird;

und schließlich zwei der Richtantennen nahe der/den Nicht-Richtantenne(n), die das Funksignal empfängt bzw. empfangen, angeordnet sind, und abhängig von der (den) Nicht-Richtantenne(n), die das Funksignal empfängt bzw. empfangen, betrieben sind, um rotierend zwei Richtungen zu detektieren, in welchen die Richtantennen jeweils die maximale Feldstärke detektieren; wobei das Steuerungszentrum die exakte Position der Funksignalquelle entsprechend der Triangularvermessung bestimmt, welche auf der Position der zwei betriebenen Richtantennen und den beiden Richtungen, in welchen die zwei Richtantennen die maximale Feldstärke detektierten, basiert.

2. System nach Anspruch 1, dadurch gekennzeichnet, daß das Steuerungszentrum einen Computer beinhaltet, und daß die Richtungen, die die maximale Feldstärke zeigen, durch die Verwendung des Computers detektiert werden.

3. System nach Anspruch 2, dadurch gekennzeichnet, daß der Computer daran angepaßt ist, Informationen zu empfangen, die die Funksignalquelle von den Nicht-Richtantennen und den Richtantennen betreffen, und um eine Peripheriekarte auf einem damit verbundenen Bildschirm zu zeichnen.

4. System nach Anspruch 1, 2 oder 3, dadurch gekennzeichnet, daß der Funksignal-Sender daran angepaßt ist, ein Funksignal zu erzeugen, welches ein Personenidentifikationssignal beinhaltet.

**5.** Verfahren zur Bestimmung der Position einer Person oder eines anderen Körpers, umfassend das Aussenden eines Funksignals einer vorbestimmten Frequenz von einem Sender, welcher von der Person oder dem anderen Körper getragen wird; Betreiben und Rotieren von zwei oder mehreren einer Vielzahl von Richtantennen, die in einem zu schützenden Flächenbereich verstreut sind, wobei die Richtantennen mit Feldstärkemeßgeräten versehen sind; Detektieren der Richtung, in welcher die Feldstärkemeßgeräte von jeder der betriebenen Richtantennen die maximale Feldstärke zeigen; und exaktes Bestimmen der Position der Funksignalquelle und auf diese Weise der exakten Position des Körpers, entsprechend einer Triangularvermessung, welche auf der Position der betriebenen Richtantennen und der detektierten Richtungen basiert;

gekennzeichnet durch das Empfangen des Funksignals, wenn es von irgendwo in dem zu schützenden Flächenbereich ausgesendet wird, durch wenigstens eine aus einer Vielzahl von Nicht-Richtantennen, die im wesentlichen in gleicher Weise innerhalb des zu schützenden Flächenbereichs verstreut sind, wodurch die Position der Quelle der Funksignale grob bestimmt wird; Anordnen von wenigstens zwei Richtantennen in der Nähe der Nicht-Richtantenne(n), welche das Funksignal empfängt bzw. empfangen, wobei wenigstens zwei Richtantennen abhängig von der bzw. den Nicht-Richtantenne(n) betrieben werden, die das Funksignal empfängt bzw. empfangen, um rotierend zwei Richtungen zu detektieren, in welchen die Richtantennen die maximale Feldstärke jeweils detektieren; und Bestimmen in dem Steuerungszentrum der exakten Position der Funksignalquelle entsprechend der Triangularvermessung, welche auf der Position der zwei betriebenen Richtantennen und den zwei Richtungen, in welchen die zwei Richtantennen die maximale Feldstärke detektierten, basiert.

**Revendications**

**1.** Système pour déterminer la position d'une personne ou de tout autre corps, qui comprend un émetteur pour produire un signal radio d'une fréquence prédéterminée porté par la personne ou cet autre corps; une multiplicité d'antennes directionnelles mises en oeuvre et tournantes, réparties à l'intérieur d'une zone pouvant être protégée et équipées d'instruments de mesure de la force du champ de façon à détecter la direction dans laquelle lesdits instruments de mesure de la force de champ de chacune de ces antennes directionnelles commandées indiquent la force de champ maximale; et un centre de commande servant à déterminer exactement la position de ladite source de signaux radio en fonction d'une triangulation basée sur les positions des antennes directionnelles commandées et sur les directions détectées, caractérisé en ce qu'il comporte en outre plusieurs antennes non-directionnelles réparties pratiquement régulièrement à l'intérieur de ladite zone pouvant être protégée de façon qu'une ou plusieurs de ces antennes non-directionnelles puissent recevoir ledit signal radio lorsqu'il est émis de n'importe où à l'intérieur de ladite zone pouvant être protégée, déterminant ainsi grossièrement une position de la source du signal radio, et en ce qu'au moins deux de la multiplicité d'antennes directionnelles sont situées près de la(des) antenne(s) non-directionnelle(s) recevant le signal radio et sont commandées, en réponse à la réception du signal radio par cette(ces) antenne(s) non-directionnelle(s),pour entrer en rotation et détecter ainsi deux directions dans lesquelles ces antennes directionnelles détectent respectivement la force de champ maximale, le centre de commande déterminant la position exacte de la source de signaux radio en fonction d'une triangulation basée sur les positions des deux antennes directionnelles commandées et sur les deux directions dans lesquelles ces deux antennes directionnelles détectent la force de champ maximale.

**2.** Système selon la revendication 1, caractérisé en ce que le centre de commande comprend un ordinateur et en ce que les directions présentant la force de champ maximale sont détectées par l'utilisation de cet ordinateur.

**3.** Système selon la revendication 2, caractérisé en ce que l'ordinateur est adapté pour recevoir des informations concernant ladite source de signaux radio en provenance de ces antennes non-directionnelles et de ces antennes directionnelles, et pour tracer une carte périphérique sur un affichage qui lui est relié.

**4.** Système selon l'une des revendications 1 à 3, caractérisé en ce que l'émetteur de signaux radio est adapté pour produire un signal radio contenant un signal d'identification personnel.

**5.** Méthode pour déterminer la position d'une personne ou de tout autre corps, comprenant les étapes suivantes : émettre un signal radio d'une fréquence prédéterminée à l'aide d'un émetteur porté sur la personne ou cet autre corps; mettre en oeuvre et faire tourner deux ou plusieurs d'une multiplicité d'antennes directionnelles réparties à l'intérieur d'une zone pouvant être protégée, ces antennes directionnelles étant équipées d'instruments de mesure de la force du champ; détecter la direction dans laquelle lesdits instruments de mesure de la force de champ de chacune de ces antennes directionnelles commandées indiquent la force de champ maximale; et déterminer exactement la position de la source de signaux radio et, de ce fait, la position exacte du corps en fonction d'une triangulation basée sur les positions des antennes directionnelles commandées et sur les directions détectées, caractérisée en ce que le signal radio, lorsqu'il est émis de n'importe où à l'intérieur de la zone pouvant être protégée, est reçu par au moins l'une de plusieurs antennes non-directionnelles réparties pratiquement régulièrement à l'intérieur de ladite zone pouvant être protégée, déterminant ainsi grossièrement une position de la source du signal radio, en ce qu'on dispose au moins deux de la multiplicité d'antennes directionnelles près de la(des) antenne(s) non-directionnelle(s) recevant le signal radio, en ce qu on commande ces deux (plusieurs) antennes directionnelles, en réponse à la réception du signal radio par cette-(ces) antenne(s) non-directionnelle(s), pour qu'elles entrent en rotation et détectent ainsi deux directions dans lesquelles ces antennes directionnelles détectent respectivement la force de champ maximale; et en ce qu'on détermine dans le centre de commande la position exacte de la source de signaux radio en fonction d'une triangulation basée sur les positions des deux antennes directionnelles commandées et sur les deux directions dans lesquelles ces deux antennes directionnelles ont détecté la force de champ maximale.

Fig.1

Fig.1A

Fig.1B

Fig.1C

Fig. 2